# EUROPÄISCHE PATENTSCHRIFT

(11) **EP 1 446 316 B1**
(45) Veröffentlichungstag und Bekanntmachung des Hinweises auf die Patenterteilung: **23.03.2005**
(21) Anmeldenummer: 02779560.8
(22) Anmeldetag: 14.11.2002
(51) Int. Cl.: B62D 5/04, F16H 55/06, F16H 55/22

(54) **MOTORBETRIEBENES SERVOLENKSYSTEM FÜR KRAFTFAHRZEUGE**
MOTOR-DRIVEN SERVO STEERING SYSTEM FOR MOTOR VEHICLES
SYSTEME DE DIRECTION ASSISTEE MOTORISE DESTINE A DES VEHICULES

(30) Priorität: 24.11.2001 DE 10157639
(43) Veröffentlichungstag der Anmeldung: 18.08.2004
(73) Patentinhaber: ZF Lenksysteme GmbH, 73527 Schwäbisch Gmünd (DE)
(72) Erfinder: RUPP, Arthur, 73460 Hüttlingen (DE)
(86) Internationale Anmeldenummer: PCT/EP2002/012761
(87) Internationale Veröffentlichungsnummer: WO 2003/045758

(56) Entgegenhaltungen:
- DE-A- 2 628 826
- GB-A- 418 145
- PATENT ABSTRACTS OF JAPAN vol. 1999, no. 09, 30. Juli 1999 (1999-07-30) -& JP 11 118001 A (TOYOTA MOTOR CORP), 30. April 1999 (1999-04-30)
- PATENT ABSTRACTS OF JAPAN vol. 007, no. 183 (M-235), 12. August 1983 (1983-08-12) -& JP 58 084257 A (MATSUSHITA DENKO KK), 20. Mai 1983 (1983-05-20)
- PATENT ABSTRACTS OF JAPAN vol. 1996, no. 08, 30. August 1996 (1996-08-30) -& JP 08 090667 A (MITSUBISHI GAS CHEM CO INC;MITSUBISHI ENG PLAST KK), 9. April 1996 (1996-04-09)

## Beschreibung

Die Erfindung betrifft ein Getriebe für ein motorbetriebenes Kraftfahrzeugservolenksystem gemäß Oberbegriff von Anspruch 1 und Anspruch 5. Die Erfindung betrifft außerdem ein solches Lenksystem.

Ein Getriebe für ein motorbetriebenes Kraftfahrzeugservolenksystem ist aus der JP-11-118001 A bekannt. Die JP- 11-118001 A zeigt ein Hypoid-Getriebe, auch Kegelschraubrad-Getriebe genannt, bei dem zumindest eines der Kegelschraubräder aus zwei Werkstoffen zusammen gesetzt ist. Das Rad ist radial unterteilt in einen inneren Bereich, der mit Kunstharz verfüllt ist, und in eine äußeren Bereich, der aus Metall besteht und als Hypoid-Ring bezeichnet wird. Das Kunstharz im inneren Bereich kann auch durch Einsatz von Glasfasern oder Karbonfasern verstärkt werden.

In der DE 197 23 358 A1 wird ein Überlagerungsgetriebe beschrieben, welches Teil eines motorbetriebenen Servolenksystems für ein Kraftfahrzeug ist, bei dem die Lenkbewegung des Fahrers motorisch unterstützt wird. Das Lenkrad beaufschlagt dabei einen ersten Getriebeeingang und ein Servomotor einen zweiten Getriebeeingang des Überlagerungsgetriebes, das die Drehwinkel der beiden Getriebeeingänge überlagert auf den Getriebeausgang überträgt.

Die für die Übertragung oder Abstützung des direkten mechanischen Kraftflusses eingesetzten Lenkungsteile sind dabei in der Veröffentlichung und auch bei den aus der Praxis bekannten Getrieben vorwiegend aus metallischem Werkstoff gefertigt. Dadurch läßt sich eine konstante Sicherheit des Bauteils über die Lebensdauer gewährleisten. Eine künstliche Alterung aufgrund von Umwelteinflüssen und dergleichen ist bei metallischen Werkstoffen gering. Von Nachteil ist dabei das hohe Massenträgheitsmoment sowie das hohe Gewicht der Bauteile. Die Gleiteigenschaften sowie die Dämpfungseigenschaften und die Laufruhe entsprechen ebenfalls nicht höchsten Anforderungen und könnten durch die Ausbildung der für die Abstützung oder Übertragung des mechanischen Kraftflusses eingesetzten Lenkungsteile aus einem nichtmetallischen Werkstoff deutlich verbessert werden. Wie sich gezeigt hat, können hierfür jedoch nur nichtmetallische Werkstoffe eingesetzt werden, die hinsichtlich ihrer mechanischen Eigenschaften und insbesondere um die Sicherheit nicht einzuschränken, die Eigenschaften eines metallischen Werkstoffes aufweisen müssen. Ein derartiger nichtmetallischer Werkstoff ist hinsichtlich der Kosten und der Validierung nicht sinnvoll realisierbar. Die Vorteile, die aus dem Einsatz eines nichtmetallischen Werkstoffes entstehen können, lassen sich somit nicht nutzen.

Aus der JP-58-084257 A ist ein Kraftübertragungselement, nämlich ein Zahnrad, für ein Getriebe bekannt. Das Zahnrad ist aus zwei verschiedenen Werkstoffen, nämlich aus Metall und Kunststoff zusammengesetzt, so daß zur Kraftübertragung im Normalbetrieb das Zahnrad über den nichtmetallischen Werkstoff, also über den Kunststoff, mit dem entsprechenden Getriebeglied in Eingriff steht. Dazu hat der aus Metall bestehende Grundkörper des Zahnrades eine T-förmige Aussparung in die der Kunststoff eingespritzt ist. Die Zähne des Zahnrades wei sen also in axialer Richtung drei Bereiche auf, von denen der Innere Bereich, d.h. der Mit tenbereich, aus Kunststoff besteht und die äußeren Bereiche, d.h. die Randbereiche, aus Metall bestehen.

Aus der DE-OS-2628826 ist ein Zahnrad bekannt, das einen Zahnkranz aufweist mit metallenen Zähnen und mit einer einseitig vorgesehenen Isolierschicht aus Kunststoff.

Aus der G 83 14 824 U1 sind Zahnräder und ähnlich verzahnte Teile, insbesondere Schneckenräder bekannt, die aus einem Eisen-Gußwerkstoff gebildet sind und bei denen die Zahnflanken mit einem aufgespritzten Überzug aus Bronze oder aus einem anderen Werkstoff mit guten Gleiteigenschaften versehen sind. Ein derartiges Verfahren ist in der Herstellung teuer und aufwendig und für heutige Getriebe nicht sinnvoll einsetzbar. Gute Dämpfungseigenschaften, eine gute Laufruhe sowie ein geringes Massenträgheitsmoment und ein insbesondere für den Einsatz eines Getriebes in Lenksystemen von Kraftfahrzeugen wichtiges geringes Gewicht, läßt sich damit nicht realisieren.

Aus der DE 39 06 639 A1 ist ein Getriebe zum Übertragen einer vergleichsweisen kleinen Leistung, insbesondere bei Hilfsaggregaten von Kraftfahrzeugen, bekannt. Dabei ist wenigstens eines der beiden Getriebeglieder aus einem elastischen Werkstoff, vorzugsweise Kunststoff, gefertigt. Der Zahn des einen Getriebegliedes ist hierbei in Richtung der fortlaufenden Verzahnung gesehen größer als die Zahnlücke des anderen Getriebegliedes. Die miteinander in Eingriff befindlichen Zähne der beiden Getriebeglieder greifen somit elastisch verspannt ineinander, so daß das übliche Zahnspiel aufgehoben ist. Vorgesehen kann dabei ebenfalls, sein, daß sich von der sogenannten Zahnlücke ausgehend, schlitzartige Ausnehmungen in radialer Richtung in die Ronde des Zahnrades hineinstrecken.

Bei den bekannten Getrieben, deren Kraftüberagungselemente zumindest zum Teil aus. einem nichtmetallischen Werkstoff, insbesondere aus Kunststoff, bestehen, tritt zwar eine geringere Geräuschentwicklung auf, jedoch eignen sich die bekannten Konstruktionen nur für die Übertragung von kleineren Leistungen und können nur für solche Anwendungen, z.B. für Elektrowerkzeuge oder für Heizungsklappen oder dergleichen eingesetzt werden.

Der vorliegenden Erfindung liegt daher die Aufgabe zugrunde, ein Getriebe, insbesondere ein Überlagerungsgetriebe für Lenksysteme von Kraftfahrzeugen zu schaffen, bei dem die Vorteile eines günstig herzustellenden und einfach zu verarbeitenden nichtmetallischen Werkstoffes genutzt werden können, ohne daß ein Ausfall des Lenksystemes aufgrund eines Ausfalles des nichtmetallischen Werkstoffes befürchtet werden muß.

Diese Aufgabe wird erfindungsgemäß durch die Merkmale von Anspruch 1 bzw. 5 gelöst sowie durch das entsprechend vorgeschlagene Servolenksystem nach Anspruch 6.

Dadurch, daß das Kraftübertragungselement an seinem zur Kraftübertragung vorgesehenen Umfang mit wenigstens zwei Werkstoffen ausgebildet ist, lassen sich die aus dem nichtmetallischen Werkstoff resultierenden Vorteile mit den Vorteilen eines weiteren Werkstoffes kombinieren. Dabei kann der weitere Werkstoff derart ausgebildet sein, daß bei größeren Kräften, insbesondere bei Mißbrauch, sowie bei Versagen des nichtmetallischen Werkstoffes, die Kraftübertragung von diesem übernommen wird. Der Kraftfluß wird somit durch den weiteren Werkstoff abgesichert. In Normalbetrieb dient der nichtmetallische Werkstoff zur Kraftübertragung, so daß ein geringes Massenträgheitsmoment sowie ein geringes Gewicht realisiert werden kann.

Weitere vorteilhafte Eigenschaften wie gute Gleiteigenschaften, Dämpfungseigenschaften und eine gute Laufruhe lassen sich ebenfalls durch den nichtmetallischen Werkstoff realisieren.

Dadurch, daß der nichtmetallische Werkstoff durch einen weiteren Werkstoff abgesichert ist, kann der nichtmetallische Werkstoff kostengünstig hergestellt und einfach eingesetzt werden. Ein Einsatz eines teuren nichtmetallischen Werkstoffes, der hinsichtlich seiner mechanischen Eigenschaften auf den Stand eines metallischen Werkstoffes gebracht wird und somit insbesondere auch kostenmäßig nicht sinnvoll eingesetzt werden kann, ist dadurch nicht notwendig.

Erfindungsgemäß ist ferner vorgesehen, daß der nichtmetallische Werkstoff im Mittenbereich des Umfangs des Kraftübertragungselementes angeordnet ist und der an den Mittenbereich des Umfangs des Kraftübertragungselementes angrenzende Außenbereich aus einem hochbelastbaren, dauerfesten Werkstoff gebildet ist.

Bei einem Versagen des im Mittenbereich angeordneten nichtmetallischen Werkstoffes kommt der angrenzende Außenbereich des Umfanges zum Tragen, so daß eine Funktionsfähigkeit über die gesamte Lebensdauer, insbesondere auch bei Mißbrauch, gewährleistet ist.

Selbst bei einem Ausfall des nichtmetallischen Teiles des Kraftübertragungselementes ist somit kein Ausfall des Lenksystemes zu befürchten.. Eine Anordnung des nichtmetallischen Werkstoffes im Mittenbereich hat sich für die konstruktive Ausführung als besonders geeignet herausgestellt, da somit das Kraftübertragungselement im Normalbetrieb lediglich mit diesem Bereich in Eingriff mit dem Getriebeglied steht.

Eine Anordnung des hochbelastbaren, dauerfesten Werkstoffes an beiden an den Mittenbereich angrenzenden Außenbereichen, hat sich als besonders vorteilhaft herausgestellt. Selbstverständlich ist jedoch auch eine Anordnung an nur einem Außenbereich denkbar, so daß der andere Außenbereich entweder ebenfalls aus dem nichtmetallischen Werkstoff gebildet ist, der auch den Mittenbereich bzw. die Mittenbahn bildet oder ein dritter Werkstoff zum Einsatz kommt.

Von Vorteil ist es, wenn der nichtmetallische Werkstoff aus Kunststoff ausgebildet ist.

Eine Ausbildung des nichtmetallischen Werkstoffes als Kunststoff hat sich als besonders geeignet bezüglich der bereits erwähnten vorteile und im Hinblick auf einen kostengünstigen Einsatz herausgestellt.

In einer konstruktiven Ausgestaltung der Erfindung nach Anspruch 6 ist vorgesehen sein, daß der hochbelastbare, dauerfeste Werkstoff aus hartem, faserverstärktem Kunststoff ausgebildet ist.

Wie sich in Versuchen herausgestellt hat, läßt sich' auch eine Ausbildung des hochbelastbaren, dauerfesten Werkstoffes aus Stahl in besonders vorteilhafter Weise realisieren. Eine Ausbildung aus Stahl garantiert.eine zuverlässige Kraftübertragung über die gesamte Lebensdauer des Getriebes.

Vorteilhafte Ausgestaltungen und Weiterbildungen der Erfindung ergeben sich aus den weiteren Unteransprüchen und aus dem nachfolgend anhand der Zeichnung prinzipmäßig dargestellten Ausführungsbeispiel.

Es zeigt:
- Fig. 1: eine Darstellung eines Kraftübertragungselementes und eines damit in Eingriff stehenden Getriebegliedes; und
- Fig. 2: einen Querschnitt durch ein Kraftübertragungselement.

Ein motorbetriebenes Servolenksystem für Kraftfahrzeuge mit einem Überlagerungsgetriebe ist hinlänglich bekannt, weshalb nachfolgend darauf nicht näher eingegangen wird. Nur beispielsweise sei hierfür die DE 197 23 358 A1 erwähnt.

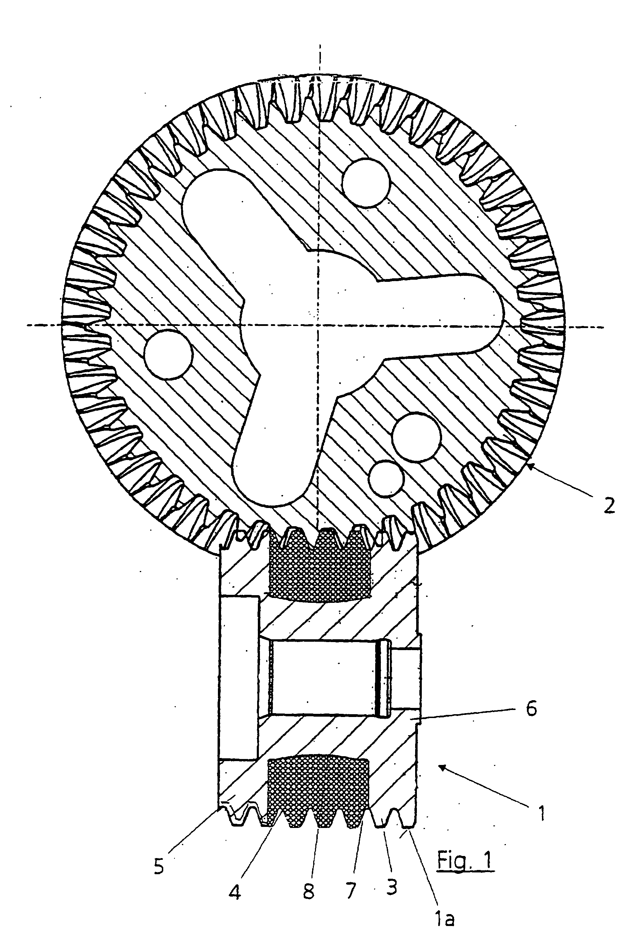

Fig. 1 zeigt ein Kraftübertragungselement 1 eines Überlagerungsgetriebes für Lenksysteme, das mit einem Getriebeglied 2 in Eingriff steht. Selbstverständlich können in alternativen Ausgestaltungen auch mehr als ein Kraftübertragungselement 1 vorgesehen sein. Das Kraftübertragungselement ist in dem vorliegenden Ausführungsbeispiel als Schnecke 1 und das Getriebeglied als Schneckenrad 2 ausgebildet.

Die Schnecke 1 weist zur Kraftübertragung an ihrem Umfang 1a eine Verzahnung 3 auf. Die Schnecke 1 ist dabei an dem Umfang 1a aus zwei verschiedenen Werkstoffen ausgebildet. In dem vorliegenden Ausführungsbeispiel handelt es sich dabei um einen aus Kunststoff 4 gebildeten nichtmetallischen Werkstoff und um einen aus Stahl 5 gebildeten hochbelastbaren, dauerfesten Werkstoff. Der Kunststoff 4 ist im Mittenbereich des Umfangs 1a der Schnecke 1 und der Stahl 5 an den Außenbereichen des Umfanges 1a angeordnet. Im Normalbetrieb erfolgt dabei, wie aus Fig. 1 ersichtlich, die Kraftübertragung durch den im Mittenbereich des Umfangs 1a angeordneten Kunststoff 4. Nur bei großen Übertragungskräften, vor allem im Mißbrauchsfall und bei einem Versagen des Mittenbereichs, kommt der Außenbereich aus Stahl 5 zum Einsatz und übernimmt die Kraftübertragung. Die Kraftübertragung ist somit durch den Außenbereich aus Stahl 5 abgesichert.

Als Kunststoff 4 sind verschiedene Kunststoffe, wie z.B. Polyamid, geeignet. Die jeweilige Auswahl des am besten geeigneten Kunststoffes kann dabei an die spezifische Situation angepaßt werden. Die Verzahnung 3 kann unabhängig, ob diese aus dem Kunststoff 4 oder dem Stahl 5 gebildet ist, eine identische Geometrie aufweisen.

Anstelle des Einsatzes des Stahles 5 kann selbstverständlich auch ein anderer metallischer Werkstoff eingesetzt werden. Denkbar ist hierbei auch ein harter, faserverstärkter Kunststoff. Wichtig ist lediglich, daß dieses Material große Übertragungskräfte aufnehmen kann und bei einem Versagen des Mittenbereiches eine zuverlässige Funktion des Lenksystemes garantiert.

Die in Fig. 1 dargestellte Schnecke 1 weist im wesentlichen einen aus dem Stahl 5 gebildeten metallischen Grundkörper 6 auf, der im Mittenbereich des Umfanges 1a eine Aussparung 7 aufweist, in die der nichtmetallische Werkstoff 4, im vorliegenden Fall der Kunststoff 4, eingespritzt ist. Eine derartige Ausgestaltung der Schnecke 1 hat sich bezüglich einer einfachen und kostengünstigen Herstellung als besonders geeignet herausgestellt.

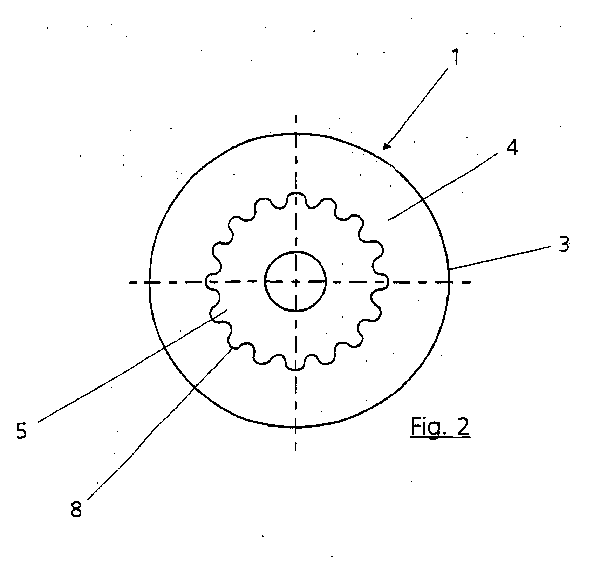

Wie aus Fig. 2 ersichtlich, kann die Verbindung zwischen dem Stahl 5 bzw. dem Grundkörper 6 und dem Kunststoff 4 in besonders vorteilhafter Weise über eine mechanische Innenverzahnung 8 erfolgen. Durch die Innenverzahnung 8 wird eine feste und zuverlässige Verbindung zwischen dem Stahl 5 und dem Kunststoff 4 gewährleistet.

Hierzu ist vorstellbar, daß die Schnecke 1 zuerst als zylindrischer Rohling mit dem eingespritzten Kunststoff 4 hergestellt wird und im Außenbereich des Umfangs 1a aus Stahl 5 und im Mittenbereich aus Kunststoff 4 besteht. Anschließend kann mittels bekannter Technik, beispielsweise Zerspanung, die Verzahnung 3 eingebracht werden.

Alternativ dazu ist auch vorstellbar, daß die Verzahnung 3 in dem aus Stahl 5 gefertigten Außenbereich schon vorgearbeitet ist und dieser Durchmesser etwas geringer ist als der des anschließend einzubringenden Mittenbereich aus Kunststoff 4, der nach dem Einbringen zur Erzeugung einer Verzahnung 3 verspant und somit nivelliert wird.

Alternativ zu der in Fig. 1 dargestellten Ausgestaltung der Schnecke 1 kann auch vorgesehen sein, daß der im Mittenbereich eingebrachte Kunststoff 4 lediglich aufgespritzt wird, d.h. daß es sich im Extremfall nur um eine Art Beschichtung handelt. Hierfür können gegebenenfalls verschiedene bekannte Beschichtungsverfahren eingesetzt werden. Vorteilhaft ist jedoch die in Fig. 1 dargestellte Form, bei der sich der Kunststoff 4 tief in den Grundkörper 6 bzw. in die Schnecke 1 erstreckt. Die bereits erwähnten Vorteile lassen sich somit besonders gut erzielen.

Selbstverständlich ist die gezeigte Ausgestaltung nicht auf das genannte Ausführungsbeispiel beschränkt, vielmehr ergeben sich für den Fachmann eine Vielzahl von Einsatzmöglichkeiten.

### Bezugszeichen

- 1: Kraftübertragungselement; Schnecke
- 1a: Umfang
- 2: Getriebeglied; Schneckenrad
- 3: Verzahnung
- 4: nichtmetallischer Werkstoff; Kunststoff
- 5: hochbelastbarer, dauerfester Werkstoff; Stahl
- 6: Grundkörper
- 7: Aussparung
- 8: Innenverzahnung

## Patentansprüche

1. Getriebe für ein
motorbetriebenes Kraftfahrzeugservolenksystem, welches wenigstens ein Kraftübertragungselement und ein mit diesem in Eingriff stehendes Getriebeglied aufweist, bei dem das Kraftübertragungselement (1) an seinem zur Kraftübertragung vorgesehenen Umfang (1a) mit wenigstens zwei Werkstoffen (4, 5) derart ausgebildet ist, daß zur Kraftübertragung im Normalbetrieb ein nichtmetallischer Werkstoff (4) mit dem Getriebeglied (2) in Eingriff steht,
**dadurch gekennzeichnet, dass** das Kraftübertragungselement (1) weitgehend aus einem metallischen Werkstoff (5) gebildet ist und der aus nichtmetallische Werkstoff (4) gebildete Teil des Umfanges (1a) auf den metallischen Werkstoff (5) aufgespritzt oder eingespritzt ist,
und dass der aus nichtmetallischem Werkstoff (4) gebildete Teil (4) im Mittenbereich des Umfangs (1a) des Kraftübertragungselements (1) angeordnet ist wobei der metallische Werkstoff (5) mit dem aus nichtmetallische Werkstoff (4) gebildete Teil des Umfanges (1a) über eine Innenverzahnung (8) verbunden ist.

2. Getriebe nach Anspruch 1,
**dadurch gekennzeichnete dass**
der im Normalbetrieb eingriffsfreie zweite Werkstoff als hochbelastbarer, dauerfester Werkstoff ausgebildet ist.

3. Getriebe nach Anspruch 2,
**dadurch gekennzeichnet, dass** wenigstens ein an den Mittenbereich des Umfanges (1a) des Kraftübertragungselementes (1) angrenzender Außenbereich aus dem hochbelastbaren, dauerfesten Werkstoff (5) gebildet ist.

4. Getriebe nach einem der Ansprüche 1 bis 3
**dadurch gekennzeichnet, dass**
das Kraftübertragungselement (1) als Schnecke und
das Getriebeglied (2) als Schneckenrad ausgebildet ist.

5. Getriebe für ein
motorbetriebenes Kraftfahrzeugservolenksystem, welches wenigstens ein Kraftübertragungselement und ein mit diesem in Eingriff stehendes Getriebeglied aufweist, bei dem
das Kraftübertragungselement (1) an seinem zur Kraftübertragung vorgesehenen Umfang (1a) mit wenigstens zwei Werkstoffen (4,5) derart ausgebildet ist, daß zur Kraftübertragung im Normalbetrieb ein nichtmetallischer Werkstoff (4) mit dem Getriebe glied (2) in Eingriff steht,
**dadurch gekennzeichnet dass** der aus nichtmetallischem Werkstoff (4) gebildete Teil. im Mittenbereich des Umfangs (1a) des Kraftübertragungselements (1) angeordnet ist, der aus Kunststoff ausgebildet ist und der hochbelastbare, dauerfeste Werkstoff (5) des Kraftübertragungselements (1) aus hartem, faserverstärktem Kunststoff ausgebildet ist.

6. Motorbetriebenes Servolensystem für Kraftfahrzeuge mit einem Getriebe nach Anspruch 1 oder 5,

## Claims

1. Gear mechanism for an engine-driven motor-vehicle power steering system which has at least one force transmission element and one gear-mechanism member which engages with the latter, in which gear mechanism the force transmission element (1) is configured with at least two materials (4, 5) on its circumference (1a) which is provided for force transmission, in such a way that a non-metallic material (4) engages with the gear-mechanism member (2) for force transmission during normal operation, **characterized in that** the force transmission element (1) is formed largely from a metallic material (5) and that part of the circumference (1a) which is formed from non-metallic material (4) is injection-moulded onto or into the metallic material (5), and **in that** the part (4) which is formed from non-metallic material (4) is arranged in the centre region of the circumference (1a) of the force transmission element (1), the metallic material (5) being connected via inner toothing (8) to that part of the circumference (1a) which is formed from non-metallic material (4).

2. Gear mechanism according to Claim 1, **characterized in that** the second material which is not engaged during normal operation is configured as a fatigue-resistant material which is able to withstand high loads.

3. Gear mechanism according to Claim 2, **characterized in that** an outer region which adjoins the centre region of the circumference (1a) of the force transmission element (1) is formed from the fatigue-resistant material (5) which is able to withstand high loads.

4. Gear mechanism according to one of Claims 1 to 3, **characterized in that** the force transmission element (1) is configured as a worm and the gear-mechanism member (2) is configured as a worm gear.

5. Gear mechanism for an engine-driven motor-vehicle power steering system which has at least one force transmission element and one gear-mechanism member which engages with the latter, in which gear mechanism the force transmission element (1) is configured with at least two materials (4, 5) on its circumference (1a) which is provided for force transmission, in such a way that a non-metallic material (4) engages with the gear-mechanism member (2) for force transmission during normal operation, **characterized in that** the part which is formed from non-metallic material (4) is arranged in the centre region of the circumference (1a) of the force transmission element (1) and is formed from plastic, and the fatigue-resistant material (5), which is able to withstand high loads, of the force transmission element (1) is formed from hard, fibre-reinforced plastic.

6. Engine-driven power steering system for motor vehicles having a gear mechanism according to Claim 1 or 5.

## Revendications

1. Transmission pour un système de direction assistée motorisé pour véhicules automobiles, qui présente au moins un élément de transfert de force et un organe de transmission en prise avec celui-ci, dans laquelle l'élément de transfert de force (1) est réalisé sur son pourtour (1a) prévu pour le transfert de force avec au moins deux matériaux (4, 5) de telle sorte que pour le transfert de force en mode de fonctionnement normal, un matériau non métallique (4) soit en prise avec l'organe de transmission (2),
**caractérisée en ce que** l'élément de transfert de force (1) est essentiellement formé d'un matériau métallique (5) et la partie du pourtour (1a) formée du matériau non métallique (4) est pulvérisée ou injectée sur le matériau métallique (5), et **en ce que** la partie (4) formée du matériau non métallique (4) est disposée dans la région centrale du pourtour (1a) de l'élément de transfert de force (1), le matériau métallique (5) étant connecté à la partie du pourtour (1a) formée du matériau non métallique (4) par le biais d'une denture interne (8).

2. Transmission selon la revendication 1,
**caractérisée en ce que** le deuxième matériau non engagé lors du mode de fonctionnement normal est réalisé en tant que matériau durable et pouvant être fortement sollicité.

3. Transmission selon la revendication 2,
**caractérisée en ce qu'**
au moins une région extérieure adjacente à la région centrale du pourtour (1a) de l'élément de transfert de force (1) est formée du matériau (5) durable et pouvant être fortement sollicité.

4. Transmission selon l'une quelconque des revendications 1 à 3,
**caractérisée en ce que** l'élément de transfert de force (1) est réalisé sous forme de vis sans fin et l'organe de transmission (2) est réalisé sous forme de roue à denture hélicoïdale.

5. Transmission pour un système de direction assistée motorisé pour véhicules automobiles, qui présente au moins un élément de transfert de force et un organe de transmission en prise avec celui-ci, dans laquelle l'élément de transfert de force (1) est réalisé sur son pourtour (1a) prévu pour le transfert de force avec au moins deux matériaux (4, 5) de telle sorte que pour le transfert de force en mode de fonctionnement normal, un matériau non métallique (4) soit en prise avec l'organe de transmission (2),
**caractérisée en ce que** la partie formée du matériau non métallique (4) est disposée dans la région centrale du pourtour (1a) de l'élément de transfert de force (1) qui est réalisée en plastique, et le matériau durable et pouvant être fortement sollicité (5) de l'élément de transfert de force (1) est réalisé en plastique dur renforcé par des fibres.

6. Système de direction assistée motorisé pour véhicules automobiles, comprenant une transmission selon la revendication 1 ou 5.
